# EUROPÄISCHE PATENTSCHRIFT

(11) **EP 3 085 671 B1**
(45) Veröffentlichungstag und Bekanntmachung des Hinweises auf die Patenterteilung: **08.10.2025**
(21) Anmeldenummer: 16165469.4
(22) Anmeldetag: 15.04.2016
(51) Int. Cl.: C02F 11/12, F26B 25/22

(54) **VERFAHREN ZUM TROCKNEN VON KLÄRSCHLAMM SOWIE TROCKNUNGSANLAGE**
METHOD FOR DRYING SEWAGE SLUDGE AND DRYING SYSTEM
PROCÉDÉ DE SÉCHAGE DES BOUES D'ÉPURATION ET INSTALLATION DE SÉCHAGE

(30) Priorität: 21.04.2015 DE 102015106120
(43) Veröffentlichungstag der Anmeldung: 26.10.2016
(73) Patentinhaber: Huber SE, 92334 Berching (DE)
(72) Erfinder: Ostermann, Stefan, 92353 Postbauer-Heng (DE)
(74) Vertreter: Canzler & Bergmeier Patentanwälte Partnerschaft mbB

(56) Entgegenhaltungen:
- DE-A1- 3 137 227
- DE-A1- 3 231 004
- DE-U1- 202009 004 860
- JP-A- 2008 221 060
- JP-A- H0 957 296
- JP-A- H01 315 398
- JP-A- H04 338 300
- JP-A- S6 434 500
- US-A1- 2005 091 877

## Beschreibung

Die vorliegende Erfindung betrifft ein Verfahren zum Trocknen von Feuchtgut in Form von Klärschlamm mit Hilfe einer Trocknungsanlage, wobei das Feuchtgut über eine Zufuhrleitung einer Aufgabeeinheit der Trocknungsanlage zugeführt, mit Hilfe der Aufgabeeinheit auf eine Trocknungsfläche der Trocknungsanlage aufgegeben und dort getrocknet wird.

Ferner wird eine Trocknungsanlage zum Trocknen von Feuchtgut in Form von Klärschlamm vorgeschlagen, wobei die Trocknungsanlage wenigstens eine Trocknungsfläche zur Aufnahme des Feuchtguts während dessen Trocknung aufweist, wobei die Trocknungsanlage wenigstens eine Aufgabeeinheit besitzt, mit deren Hilfe das Feuchtgut während des Betriebs der Trocknungsanlage auf die Trocknungsfläche aufbringbar ist, und wobei die Trocknungsanlage wenigstens eine Zufuhrleitung umfasst, über die das zu trocknende Feuchtgut der Aufgabeeinheit zuführbar ist.

Um Feuchtgut, wie beispielsweise Klärschlamm, für eine weitere Verwertung (z.B. dessen Verbrennung) zu trocknen, ist es bereits seit längerem Stand der Technik, das Feuchtgut auf eine Trocknungsfläche aufzubringen und das darin enthaltene Wasser mit Hilfe entsprechender Heizvorrichtungen auszutreiben.

Ferner ist es bekannt, die Trocknungsleistung der jeweiligen Anlage oder die Höhe bzw. den Massenstrom des auf die Trocknungsfläche aufzubringenden Feuchtguts in Abhängigkeit des Wassergehalts des in die Trocknungsanlage einzubringenden Feuchtguts oder des Wassergehalts des sich bereits an unterschiedlichen Positionen auf der Trocknungsfläche befindlichen Feuchtguts zu wählen (s. beispielsweise DE 10 2011 004 788 A1). Ein weiteres Verfahren zur Trocknung von Klärschlamm bei dem der Wassergehalt zur Steuerung der Schlammzugabe verwendet wird, ist in JPS6434500A offenbart.

Auch wenn durch die genannten Verfahren bereits eine relativ befriedigende Trocknung des Feuchtguts erfolgt, so besteht dennoch ein gewisser Verbesserungsbedarf hinsichtlich der Energieeffizienz der Trocknungsanlage und der Homogenität des getrockneten Feuchtguts.

Aufgabe der vorliegenden Erfindung ist es daher, ein gegenüber dem Stand der Technik verbessertes Verfahren zum Trocknen von Feuchtgut in Form von Klärschlamm sowie eine zur Durchführung des Verfahrens geeignete Trocknungsanlage vorzuschlagen.

Die Aufgabe wird gelöst durch ein Verfahren sowie eine Trocknungsanlage mit den Merkmalen der unabhängigen Patentansprüche.

Erfindungsgemäß wird zunächst ein Verfahren zum Trocknen von Feuchtgut in Form von Klärschlamm mit Hilfe einer Trocknungsanlage vorgeschlagen. Unter dem Begriff "Feuchtgut" wird im Rahmen der Erfindung also Klärschlamm verstanden, der neben einem gewissen Wasseranteil auch einen gewissen Anteil an Feststoffen besitzt. Ein typisches Beispiel eines solchen Guts ist Klärschlamm, d.h. Schlamm, wie er bei der Abwasserreinigung entsteht.

Das erfindungsgemäße Verfahren sieht vor, dass das Feuchtgut in Form von Klärschlamm über eine Zufuhrleitung einer Aufgabeeinheit der Trocknungsanlage zugeführt, mit Hilfe der Aufgabeeinheit auf eine Trocknungsfläche der Trocknungsanlage aufgegeben und dort bis zum gewünschten Restwassergehalt getrocknet wird. Bei der Zufuhrleitung handelt es sich vorzugsweise um ein Rohrleitungssystem bestehend aus starren und/oder flexiblen Rohrabschnitten, über die das Feuchtgut beim Betrieb der Trocknungsanlage aus einem Feuchtgut-Vorratsbehältnis oder einer sonstigen Feuchtgut-Sammelstelle abgezogen und der Aufgabeeinheit zugeführt werden kann. Die sich an die Zufuhrleitung anschließende Aufgabeeinheit dient schließlich dem Aufbringen des über die Zufuhrleitung ankommenden Feuchtguts auf die Trocknungsfläche. Als Aufgabeeinheit kann ein Endstück mit einer Öffnung am Ende der Zufuhrleitung dienen, über die das Feuchtgut abgegeben werden kann. Denkbar ist jedoch auch, dass die Aufgabeeinheit eine Aufteilung des in der Zufuhrleitung als kontinuierlicher Strang vorliegenden Feuchtguts bewirkt. Beispielsweise kann die Aufgabeeinheit als Extruder ausgebildet sein, der eine oder mehrere vom Feuchtgut zu passierende Öffnungen sowie eine relativ zu den Öffnungen bewegbare Schneideinheit besitzt, um den Feuchtgutstrang in ein Vielzahl von kleinen pelletförmigen Einzeleinheiten zu zerteilen, die schließlich neben- und oder übereinander auf die Trocknungsfläche fallen.

Bei der Trocknungsfläche handelt es sich vorzugsweise um ein umlaufendes, mit Hilfe eines Antriebs angetriebenes, Trocknungsband, das beispielsweise von einem - der Trocknung des Feuchtguts dienenden - erwärmten Luftstrom durchströmt wird (das Trocknungsband ist hierfür vorzugsweise perforiert). In diesem Fall ist die Trocknungsanlage als Bandtrockner ausgebildet.

Ziel des Verfahrens ist es nun, das auf die Trocknungsfläche aufgebrachte Feuchtgut in Form von Klärschlamm derart zu trocknen, dass sich die Endfeuchte (d.h. der Restwassergehalt) des getrockneten Feuchtguts innerhalb gewisser und möglichst enger Grenzen befindet, um eine gezielte Weiterverwertung des getrockneten Feuchtguts zu ermöglichen. Ferner sollte die Trocknungsleistung der Trocknungsanlage während des Trocknungsvorgangs möglichst konstant bleiben und sich hierbei auf einem Niveau bewegen, bei dem der Wirkungsgrad der Trocknungsanlage am höchsten ist.

Um dies zu gewährleisten, wird nun erfindungsgemäß vorgeschlagen, dass während der Aufgabe des Feuchtguts, d.h. des Klärschlamms, auf die Trocknungsfläche und im Bereich der Zufuhrleitung und/oder der Aufgabeeinheit mit Hilfe eines Sensors eine vom Wassergehalt des den Sensor passierenden Feuchtguts abhängige Kenngröße überwacht wird. Bei der Kenngröße kann es sich um den Wasseranteil des Feuchtguts oder aber auch um das Messsignals eines den Wasseranteil des Feuchtguts direkt oder indirekt messenden Sensors handeln. Generell kann hierbei jede physikalisch messbare Kenngröße im Rahmen der Erfindung herangezogen werden, die vom Wassergehalt des Feuchtguts abhängt. Ferner sei darauf hingewiesen, dass sich der Sensor entweder in oder an der Zufuhrleitung bzw. in oder an der Aufgabeeinheit befinden sollte.

In jedem Fall sieht die Erfindung vor, dass die Menge (Volumen oder Masse) des pro Zeiteinheit mit Hilfe der Aufgabeeinheit auf die Trocknungsfläche aufgegebenen Feuchtguts unter Berücksichtigung der Kenngröße fortwährend reguliert wird. Das Feuchtgut wird während des Trocknungsvorgangs also nicht mit stets gleichem und zu Beginn des Trocknungsverfahrens festgelegtem Massen- oder Volumenstrom auf die Trocknungsfläche aufgegeben. Vielmehr wird der Wassergehalt bei der Aufgabe berücksichtigt, wobei die Menge des aufgegebenen Feuchtguts umso geringer gewählt wird, umso größer der Wassergehalt ist, so dass der Restwassergehalt des die Trocknungsanlage verlassenden Feuchtguts stets konstant ist oder sich zumindest nur innerhalb sehr enger Grenzen bewegt. Die Trocknungsleistung der Trocknungsanlage bleibt daher vorzugsweise während des Trocknungsvorgangs zumindest nahezu konstant.

Zusammenfassend sieht die Erfindung also vor, den Wassergehalt des zu trocknenden Feuchtguts in Form von Klärschlamm in einem Bereich zu überwachen, der sich unmittelbar vor der Stelle befindet, an der das Feuchtgut aus der Aufgabeeinheit austritt und die Menge des austretenden Feuchtguts in Abhängigkeit des unmittelbar zuvor ermittelten Wassergehalts zu regulieren, d.h. stetig bzw. fortlaufend an den Wassergehalt anzupassen.

Auch ist es von Vorteil, wenn der Betrag der Kenngröße in regelmäßigen Zeitabständen und damit nicht kontinuierlich ermittelt wird (wobei letzterer Fall auch denkbar wäre). Beispielsweise wäre es denkbar, den Betrag der Kenngröße zwischen 1 und 100 Mal pro Stunde zu ermitteln und die Menge des auf die Trocknungsfläche aufzubringenden Feuchtguts jeweils im Anschluss an die Messung der Kenngröße an das Ergebnis der Messung anzupassen. Die Anpassung der Menge des auf die Trocknungsfläche auftreffenden Feuchtguts wird in diesem Fall nicht kontinuierlich aber dennoch in regelmäßigen Abständen angepasst.

Auch ist es von Vorteil, wenn der Betrag der Kenngröße über jeweils einen definierten Zeitraum gemittelt wird und die Menge des pro Zeiteinheit mit Hilfe der Aufgabeeinheit auf die Trocknungsfläche aufgegebenen Feuchtguts unter Berücksichtigung der jeweils gemittelten Kenngrößen reguliert wird. Hierdurch kann verhindert werden, dass die Aufgabemenge (= Menge an Feuchtgut, dass die Aufgabeeinheit verlässt) aufgrund einer nur sehr kurzzeitigen Schwankung des Wassergehalts des den Sensor passierenden Feuchtguts verändert wird. Vielmehr erfolgt eine Anpassung der Aufgabemenge in Abhängigkeit entsprechender Mittelwerte, die auf Basis mehrere Messungen der Kenngröße und damit auf Basis des Wassergehalts unterschiedlicher Abschnitte des Feuchtguts erhalten wurden. Die Anzahl der Änderung der Aufgabemenge kann hierdurch minimiert werden.

Erfindungsgemäß erfolgt eine Änderung der Menge des pro Zeiteinheit auf die Trocknungsfläche aufgegebenen Feuchtguts nur dann, wenn sich der Betrag der Kenngröße in einem definierten Zeitraum um wenigstens einen bestimmten Mindestbetrag ändert oder um einen bestimmten Mindestbetrag von einem festgelegten Referenzwert abweicht. Eine Veränderung des Wassergehalts des den Sensor passierenden Feuchtguts bewirkt in diesem Fall nicht zwangsläufig eine Änderung der Abgabemenge. Vielmehr erfolgt die Änderung nur beim Über- oder Unterschreiten bestimmter Grenzwerte oder einer definierten zeitbezogenen Änderung des Wassergehalts des den Sensor passierenden Feuchtguts.

Ebenso bringt es Vorteile mit sich, wenn das Feuchtgut mit Hilfe einer Fördereinrichtung, vorzugsweise mit Hilfe einer Pumpe, durch die Zufuhrleitung hin zur Aufgabeeinheit gefördert wird, wobei die Förderleistung der Fördereinrichtung unter Berücksichtigung der genannten Kenngröße reguliert wird. Beispielsweise wäre es beim Trocknen von Klärschlamm denkbar, eine Dickstoffpumpe einzusetzen und deren Drehzahl in Abhängigkeit des Wassergehalts des den Sensor passierenden Feuchtguts zu regeln. Beim ebenso möglichen Einsatz einer Förderschnecke würde entsprechend deren Drehzahl variiert.

Vorteile bringt es zudem mit sich, wenn die Kenngröße berührungslos ermittelt wird. In diesem Fall kommt der Sensor nicht unmittelbar mit dem Feuchtgut in Kontakt, so dass eine Verschmutzung oder Beschädigung des Sensors durch das Feuchtgut ausgeschlossen ist. Beispielsweise könnte der Sensor als Mikrowellensensors (andere Bezeichnung: Mikrowellenresonator) ausgebildet sein. Der Sensor wäre in diesem Fall derart in die Förderleitung zu integrieren, dass der Resonatorraum des Mikrowellensensors vom Feuchtgut passiert wird. In Abhängigkeit des Wassergehalts ändert sich während der Messung das Resonanzsignal des Mikrowellensensors, so dass diese Kenngröße schließlich Rückschlüsse auf den Wassergehalt des den Sensor passierenden Feuchtguts und letztendlich die Regulierung der Abgabemenge der Aufgabeeinheit ermöglicht. Der Sensor ist im Übrigen vorzugsweise (in Förderrichtung des Feuchtguts gesehen) zwischen der Fördereinrichtung und der Aufgabeeinheit angeordnet.

Besonders vorteilhaft ist es, wenn die Regulierung der Menge des pro Zeiteinheit auf die Trocknungsfläche aufgegebenen Feuchtguts unter Berücksichtigung der aktuellen Trocknungsleistung und/oder weiterer Kennwerte der Trocknungsanlage erfolgt. Mit anderen Worten können also bei der Regulierung der Abgabemenge der Aufgabeeinheit auch trocknungsanlagenspezifische Kennwerte berücksichtigt werden. Beispielsweise könnte bei ansonsten gleichbleibenden Kennwerten/Kenngrößen die Aufgabemenge bei höherer Trocknungsleistung der Trocknungsanlage höher gewählt werden als bei geringerer Trocknungsleistung.

Denkbar ist jedoch ebenso, dass neben der Aufgabemenge auch weitere Größen der Trocknungsanlage bzw. des Trocknungsprozesses in Abhängigkeit des Wassergehalts des den Sensor passierenden Feuchtguts reguliert werden. So wäre es möglich, die Leistung eines als Teil der Aufgabeeinheit ausgebildeten Extruders zu ändern, wenn sich der Wassergehalt des den Sensor passierenden Feuchtguts ändert. Beispielsweise könnte die Aufgabeeinheit einen Extruder mit einer Pelletiereinrichtung zur Pelletierung (d.h. Zerstückelung) des Feuchtguts umfassen, wobei die Pelletiereinrichtung unter Berücksichtigung der Kenngröße betrieben und deren Parameter in Abhängigkeit des Wassergehalts des den Sensor passierenden Feuchtguts geändert wird.

Des Weiteren betrifft die Erfindung eine Trocknungsanlage zum Trocknen von Feuchtgut in Form von Klärschlamm, wobei die Trocknungsanlage wenigstens eine Trocknungsfläche zur Aufnahme des Feuchtguts während dessen Trocknung aufweist, wobei die Trocknungsanlage wenigstens eine Aufgabeeinheit besitzt, mit deren Hilfe das Feuchtgut während des Betriebs der Trocknungsanlage auf die Trocknungsfläche aufbringbar ist, und wobei die Trocknungsanlage wenigstens eine Zufuhrleitung umfasst, über die das zu trocknende Feuchtgut der Aufgabeeinheit zuführbar ist. Hinsichtlich möglicher körperlicher Merkmale der Trocknungsanlage bzw. deren Bestandteile wird zunächst auf die bisherige und nachfolgende Beschreibung verwiesen, wobei sämtliche Merkmale einzeln oder in beliebiger Kombination verwirklicht sein können, solange dies nicht zu technischen Widersprüchen führt.

In jedem Fall umfasst die Trocknungsanlage (die vorzugsweise als Bandtrockner ausgebildet ist) zumindest einen im Bereich der Zufuhrleitung oder der Aufgabeeinheit angeordneten Sensor, mit dessen Hilfe eine Kenngröße messbar ist, die vom Wassergehalt des den Sensor passierenden Feuchtguts abhängt. Ferner weist die Trocknungsanlage Mittel auf, mit deren Hilfe die Menge (d.h. der Massen- oder Volumenstrom) des während des Betriebs der Trocknungsanlage mit Hilfe der Aufgabeeinheit auf die Trocknungsfläche aufgebrachten Feuchtguts unter Berücksichtigung der Kenngröße fortwährend reguliert werden kann. Bei dem Mittel handelt es sich beispielsweise um ein sich in der Zufuhrleitung angeordnetes Ventil, mit dessen Hilfe der maximale Feuchtgutdurchsatz der Zufuhrleitung regulierbar ist.

Gemäß einem weiteren Aspekt der Erfindung umfasst das genannte Mittel eine Fördereinrichtung, mit deren Hilfe das Feuchtgut während des Betriebs der Trocknungsanlage über die Zufuhrleitung der Aufgabeeinheit zugeführt wird. Ferner umfasst das Mittel eine Steuereinheit, die ausgebildet ist, die Förderleistung der Fördereinrichtung unter Berücksichtigung der mit Hilfe des Sensors ermittelten Kenngröße zu regulieren.

In diesem Zusammenhang ist zudem vorgesehen, dass die Fördereinrichtung als Pumpe (z.B. als Dickstoff- bzw. Schlammpumpe) ausgebildet ist. Die Steuereinheit wertet in diesem Fall die Messwerte des Sensors aus und vergleicht diese mit entsprechend in der Steuereinheit hinterlegten Referenzwerten. Je nach Abweichung des aktuellen Messwerts (bzw. einem Mittelwert mehrerer Messwerte) ändert die Steuerung schließlich die Förderleistung der Pumpe, um im Ergebnis die Abgabemenge des Feuchtguts an den Wassergehalt des den Sensor passierenden und damit unmittelbar vor der Abgabe stehenden Feuchtguts anzupassen.

Des Weiteren ist es vorteilhaft, wenn der Sensor ausgebildet ist, die Kenngröße berührungslos zu ermitteln. Der Sensor kann beispielsweise als optischer, kapazitiver oder auf Basis von Mikrowellenresonanz arbeitender Sensor ausgebildet sein und befindet sich beispielsweise hinter einer durchsichtigen oder undurchsichtigen Wandung der Förderleitung oder der Abgabeeinheit, so dass der Sensor selbst nicht unmittelbar mit dem Feuchtgut in Kontakt kommt.

Weitere Vorteile der Erfindung sind in dem nachfolgenden Ausführungsbeispiel beschrieben. Es zeigt schematisch:

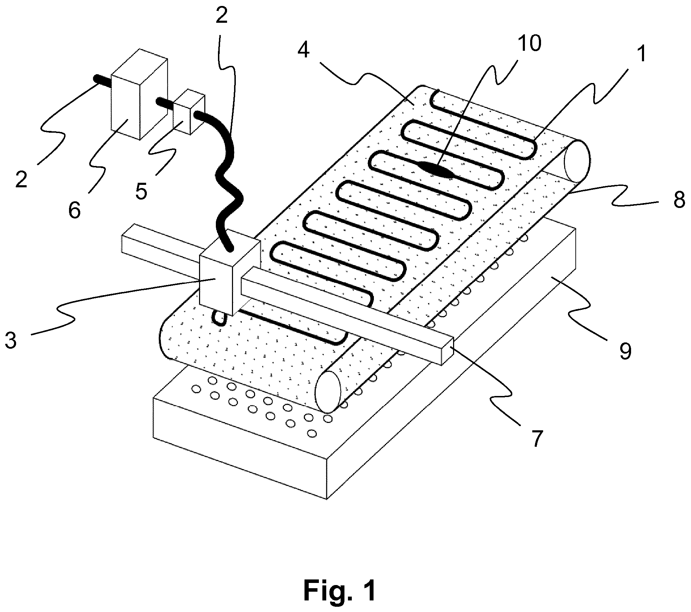

- **Figur 1**: eine perspektivische Ansicht einer erfindungsgemäßen Trocknungsanlage.
Die einzige Figur zeigt eine perspektivische Ansicht einer Trocknungsanlage für Feuchtgut 1 (Klärschlamm) als Ausführungsbeispiel einer erfindungsgemäßen Trocknungsanlage, mit der im Übrigen auch das erfindungsgemäße Verfahren durchführbar ist.

Die Trocknungsanlage umfasst eine durch ein umlaufend angetriebenes Trocknungsband 8 gebildete Trocknungsfläche 4, wobei das Trocknungsband 8 im gezeigten Beispiel perforiert ausgebildet ist, um einen Durchtritt von Trocknungsluft zu ermöglichen, die wiederum von einer, beispielsweise unterhalb der Trocknungsfläche 4 angeordneten, Heizanordnung 9 eingebracht wird.

Darüber hinaus verfügt die Trocknungsanlage über eine entlang einer Führung 7 und mit Hilfe eines nicht gezeigten Antriebs hin und her bewegbare Aufgabeeinheit 3, mit deren Hilfe das zu trocknende Feuchtgut 1, das der Aufgabeeinheit 3 über eine teilweise flexibel ausgebildete Zufuhrleitung 2 mit Hilfe einer Pumpe 6 zugeführt wird, kontrolliert auf die Trocknungsfläche 4 aufgebracht werden kann.

Die Aufgabeeinheit 3 umfasst beispielsweise eine Extrudereinheit mit einer Matrize sowie einer relativ zur Matrize beweglichen Messereinheit, mit deren Hilfe das durch die Matrize gepresste Feuchtgut 1 in einzelne pelletförmige Feuchtguteinheiten zerteilt wird.

Selbstverständlich kann das Feuchtgut 1 auch strangförmig aus der Aufgabeeinheit 3 austreten (siehe Figur), ohne hierbei pelletiert zu werden. Die Aufgabeeinheit 3 besitzt in diesem Fall keine Messereinheit.

Um nun sicherzustellen, dass das Feuchtgut 1 unabhängig von seinem Wassergehalt auf einen einheitlichen Trocknungsgrad getrocknet wird, ist nun erfindungsgemäß vorgesehen, dass der Zufuhrleitung 2 oder der Aufgabeeinheit 3 ein Sensor 5 zugeordnet ist, mit dem sich der Wassergehalt des Feuchtguts 1 unmittelbar vor der Aufgabe auf die Trocknungsfläche 4 ermitteln lässt. Ferner ist eine nicht gezeigte Steuereinheit vorgesehen, die ausgebildet ist, die Förderleistung der Pumpe 6 in Abhängigkeit des Wassergehalts des den Sensor 5 passierenden Feuchtguts 1 zu regulieren. Im Ergebnis hängt damit die Aufgabemenge des Feuchtguts 1 von dem ermittelten Wassergehalt ab, wobei die Aufgabe bei höherem Wassergehalt verringert und bei niedrigerem Wassergehalt erhöht werden kann.

Eine beispielhaft gezeichnete Dickstelle 10 ist der Figur zu entnehmen, die entstand, als der Sensor 5 vorübergehend einen geringeren Wassergehalt detektierte und die Aufgabeleistung dementsprechend kurzfristig erhöht wurde.

Die vorliegende Erfindung ist nicht auf die dargestellten und beschriebenen Ausführungsbeispiele beschränkt. Der Schutzumfang ist durch die vorliegenden Patentansprüche definiert.

### Bezugszeichenliste

- 1: Feuchtgut
- 2: Zufuhrleitung
- 3: Aufgabeeinheit
- 4: Trocknungsfläche
- 5: Sensor
- 6: Pumpe
- 7: Führung
- 8: Trocknungsband
- 9: Heizanordnung
- 10: Dickstelle

## Patentansprüche

1. Verfahren zum Trocknen von Feuchtgut (1) in Form von Klärschlamm mit Hilfe einer Trocknungsanlage, wobei das Feuchtgut (1) über eine Zufuhrleitung (2) der Trocknungsanlage einer Aufgabeeinheit (3) der Trocknungsanlage zugeführt, mit Hilfe der Aufgabeeinheit (3) auf eine Trocknungsfläche (4) der Trocknungsanlage aufgegeben und dort getrocknet wird, wobei während der Aufgabe des Feuchtguts (1) im Bereich der Zufuhrleitung (2) und/oder der Aufgabeeinheit (3) mit Hilfe eines Sensors (5) eine vom Wassergehalt des den Sensor (5) passierenden Feuchtguts (1) abhängige Kenngröße überwacht wird, und wobei die Menge des pro Zeiteinheit mit Hilfe der Aufgabeeinheit (3) auf die Trocknungsfläche (4) aufgegebenen Feuchtguts (1) unter Berücksichtigung der Kenngröße fortwährend reguliert wird,
**dadurch gekennzeichnet, dass** die Menge des pro Zeiteinheit auf die Trocknungsfläche (4) aufgegebenen Feuchtguts (1) umso geringer gewählt wird, je größer der Wassergehalt ist, wobei eine Änderung der Menge des pro Zeiteinheit auf die Trocknungsfläche (4) aufgegebenen Feuchtguts (1) nur dann erfolgt, wenn sich der Betrag der Kenngröße in einem definierten Zeitraum um wenigstens einen bestimmten Mindestbetrag ändert oder um einen bestimmten Mindestbetrag von einem festgelegten Referenzwert abweicht oder wenn eine definierte zeitbezogene Änderung des Wassergehalts des den Sensor (5) passierenden Feuchtguts (1) ermittelt wird.

2. Verfahren gemäß dem vorangegangenen Anspruch, **dadurch gekennzeichnet, dass** der Betrag der Kenngröße in regelmäßigen Zeitabständen ermittelt wird.

3. Verfahren gemäß einem der vorangegangenen Ansprüche, **dadurch gekennzeichnet, dass** das Feuchtgut (1) mit Hilfe einer Fördereinrichtung, vorzugsweise mit Hilfe einer Pumpe (6), durch die Zufuhrleitung (2) hin zur Aufgabeeinheit (3) gefördert wird, wobei die Förderleistung der Fördereinrichtung unter Berücksichtigung der genannten Kenngröße reguliert wird.

4. Verfahren gemäß einem der vorangegangenen Ansprüche, **dadurch gekennzeichnet, dass** der Betrag der Kenngröße über jeweils einen definierten Zeitraum gemittelt wird und die Menge des pro Zeiteinheit mit Hilfe der Aufgabeeinheit (3) auf die Trocknungsfläche (4) aufgegebenen Feuchtguts (1) unter Berücksichtigung der jeweils gemittelten Kenngrößen reguliert wird.

5. Verfahren gemäß einem der vorangegangenen Ansprüche, **dadurch gekennzeichnet, dass** die Kenngröße berührungslos, beispielsweise mit Hilfe eines Mikrowellensensors, ermittelt wird.

6. Verfahren gemäß einem der vorangegangenen Ansprüche, **dadurch gekennzeichnet, dass** die Regulierung der Menge des pro Zeiteinheit auf die Trocknungsfläche (4) aufgegebenen Feuchtguts (1) unter Berücksichtigung der aktuellen Trocknungsleistung und/oder weiterer Kennwerte der Trocknungsanlage erfolgt.

7. Verfahren gemäß einem der vorangegangenen Ansprüche, **dadurch gekennzeichnet, dass** die Aufgabeeinheit (3) einen Extruder mit einer Pelletiereinrichtung zur Pelletierung des Feuchtguts (1) umfasst, wobei die Pelletiereinrichtung vorzugsweise unter Berücksichtigung der Kenngröße betrieben wird.

8. Trocknungsanlage zum Trocknen von Feuchtgut (1) in Form von Klärschlamm mit Hilfe des Verfahrens gemäß einem oder mehreren der vorangegangenen Ansprüche,
- wobei die Trocknungsanlage wenigstens eine Trocknungsfläche (4) zur Aufnahme des Feuchtguts (1) während dessen Trocknung aufweist,
- wobei die Trocknungsanlage wenigstens eine Aufgabeeinheit (3) besitzt, mit deren Hilfe das Feuchtgut (1) während des Betriebs der Trocknungsanlage auf die Trocknungsfläche (4) aufbringbar ist, und
- wobei die Trocknungsanlage wenigstens eine Zufuhrleitung (2) umfasst, über die das zu trocknende Feuchtgut (1) der Aufgabeeinheit (3) zuführbar ist,
- wobei die Trocknungsanlage zumindest einen im Bereich der Zufuhrleitung (2) oder der Aufgabeeinheit (3) angeordneten Sensor (5) umfasst, mit dessen Hilfe eine Kenngröße messbar ist, die vom Wassergehalt des den Sensor (5) passierenden Feuchtguts (1) abhängt,
- wobei die Trocknungsanlage Mittel aufweist, mit deren Hilfe die Menge des während des Betriebs der Trocknungsanlage mit Hilfe der Aufgabeeinheit (3) auf die Trocknungsfläche (4) aufgebrachten Feuchtguts (1) unter Berücksichtigung der Kenngröße fortwährend regulierbar ist,
- wobei das Mittel eine Fördereinrichtung umfasst, mit deren Hilfe das Feuchtgut (1) während des Betriebs der Trocknungsanlage über die Zufuhrleitung (2) der Aufgabeeinheit (3) zugeführt wird,
- wobei die Fördereinrichtung als Pumpe (6) ausgebildet ist, und
- wobei das Mittel eine Steuereinheit umfasst, die ausgebildet ist, die Förderleistung der Fördereinrichtung unter Berücksichtigung der genannten Kenngröße zu regulieren,
**dadurch gekennzeichnet, dass** die Steuereinheit ausgebildet ist, die Menge des pro Zeiteinheit auf die Trocknungsfläche (4) aufgegebenen Feuchtguts (1) umso geringer zu wählen, je größer der Wassergehalt ist, und die Menge des pro Zeiteinheit auf die Trocknungsfläche (4) aufgegebenen Feuchtguts (1) nur dann zu ändern, wenn sich der Betrag der Kenngröße in einem definierten Zeitraum um wenigstens einen bestimmten Mindestbetrag ändert oder um einen bestimmten Mindestbetrag von einem festgelegten Referenzwert abweicht oder wenn eine definierte zeitbezogene Änderung des Wassergehalts des den Sensor (5) passierenden Feuchtguts (1) ermittelt wird.

9. Trocknungsanlage gemäß Anspruch 8, **dadurch gekennzeichnet, dass** der Sensor (5) ausgebildet ist, die Kenngröße berührungslos zu ermitteln.

## Claims

1. Method for drying moist material (1) in the form of sewage sludge with the aid of a drying plant, wherein the moist material (1) is fed via a supply pipe (2) of the drying plant to a feeding unit (3) of the drying plant, is fed with the aid of the feeding unit (3) onto a drying surface (4) of the drying plant and is dried there, wherein during the feed of the moist material (1) in the region of the supply pipe (2) and/or of the feeding unit (3) with the aid of a sensor (5) a characteristic variable dependent on the water content of the moist material (1) passing the sensor (5) is monitored, and wherein the quantity of the moist material (1) fed per unit of time with the aid of the feeding unit (3) onto the drying surface (4) is continuously regulated taking into account the characteristic variable,
**characterized in that** the quantity of the moist material (1) fed per unit of time onto the drying surface (4) is selected to be smaller the greater the water content, wherein a change in the quantity of the moist material (1) fed per unit of time onto the drying surface (4) takes place only if the absolute value of the characteristic variable changes in a defined period of time by at least a certain minimum absolute value or deviates by a certain minimum absolute value from a fixed reference value or if a defined time-related change in the water content of the moist material (1) passing the sensor (5) is determined.

2. Method according to the preceding claim, **characterized in that** the absolute value of the characteristic variable is determined at regular time intervals.

3. Method according to one of the preceding claims, **characterized in that** the moist material (1) is conveyed with the aid of a conveying device, preferably with the aid of a pump (6), through the supply pipe (2) to the feeding unit (3), wherein the conveying capacity of the conveying device is regulated taking into account the said characteristic variable.

4. Method according to one of the preceding claims, **characterized in that** the absolute value of the characteristic variable is averaged over a defined period of time in each case and the quantity of the moist material (1) fed per unit of time with the aid of the feeding unit (3) onto the drying surface (4) is regulated taking into account the characteristic variables averaged in each case.

5. Method according to one of the preceding claims, **characterized in that** the characteristic variable is determined contactlessly, for example with the aid of a microwave sensor.

6. Method according to one of the preceding claims, **characterized in that** the regulation of the quantity of the moist material (1) fed per unit of time onto the drying surface (4) takes place taking into account the current drying capacity and/or further characteristic values of the drying plant.

7. Method according to one of the preceding claims, **characterized in that** the feeding unit (3) comprises an extruder with a pelletization device for making pellets of the moist material (1), wherein the pelletization device is preferably operated taking into account the characteristic variable.

8. Drying plant for drying moist material (1) in the form of sewage sludge with the aid of the method according to one or more of the preceding claims,
- wherein the drying plant has at least one drying surface (4) for reception of the moist material (1) during the drying thereof,
- wherein the drying plant has at least one feeding unit (3), with the aid of which the moist material (1) can be applied to the drying surface (4) during the operation of the drying plant, and
- wherein the drying plant comprises at least one supply pipe (2), via which the moist material (1) to be dried can be fed to the feeding unit (3),
- wherein the drying plant comprises at least one sensor (5) arranged in the region of the supply pipe (2) or of the feeding unit (3), with the aid of which a characteristic variable dependent on the water content of the moist material (1) passing the sensor (5) can be measured,
- wherein the drying plant has means, with the aid of which the quantity of the moist material (1) applied to the drying surface (4) during the operation of the drying plant with the aid of the feeding unit (3) can be continuously regulated taking into account the characteristic variable,
- wherein the means comprises a conveying device, with the aid of which the moist material (1) is fed during the operation of the drying plant via the supply pipe (2) to the feeding unit (3),
- wherein the conveying device is designed as a pump (6), and
- wherein the means comprises a control unit which is designed to regulate the conveying capacity of the conveying device taking into account the said characteristic variable,
**characterized in that** the control unit is designed to select the quantity of the moist material (1) fed per unit of time onto the drying surface (4) to be smaller the greater the water content and to change the quantity of the moist material (1) fed per unit of time onto the drying surface (4) only if the absolute value of the characteristic variable changes in a defined period of time by at least a certain minimum absolute value or deviates by a certain minimum absolute value from a fixed reference value or if a defined time-related change in the water content of the moist material (1) passing the sensor (5) is determined.

9. Drying plant according to claim 8, **characterized in that** the sensor (5) is designed to determine the characteristic variable contactlessly.

## Revendications

1. Procédé pour sécher un produit humidifié (1) sous forme de boue d'épuration à l'aide d'une installation de séchage, dans lequel le produit humidifié (1) est acheminé par le biais d'une conduite d'alimentation (2) de l'installation de séchage à une unité d'alimentation (3) de l'installation de séchage, est déposé à l'aide de l'unité d'alimentation (3) sur une surface de séchage (4) de l'installation de séchage et y est séché, dans lequel pendant l'alimentation du produit humidifié (1) dans la région de la conduite d'alimentation (2) et/ou de l'unité d'alimentation (3) à l'aide d'un capteur (5), une caractéristique dépendant de la teneur en eau du produit humidifié (1) passant par le capteur (5) est surveillée, et dans lequel la quantité du produit humidifié (1) déposé par unité de temps à l'aide de l'unité d'alimentation (3) sur la surface de séchage (4) est régulée en continu en tenant compte de la caractéristique,
**caractérisé en ce que** la quantité du produit humidifié (1) déposé par unité de temps sur la surface de séchage (4) est choisie d'autant plus petite que la teneur en eau est grande, dans lequel une modification de la quantité du produit humidifié (1) déposé par unité de temps sur la surface de séchage (4) n'a lieu que lorsque la valeur absolue de la caractéristique dans une période de temps définie varie d'au moins une valeur absolue minimale définie ou s'écarte d'une valeur de référence définie d'une valeur absolue minimale définie ou lorsqu'une modification définie liée au temps de la teneur en eau du produit humidifié (1) passant par le capteur (5) est déterminée.

2. Procédé selon la revendication précédente, **caractérisé en ce que** la valeur absolue de la caractéristique est déterminée à intervalles de temps réguliers.

3. Procédé selon l'une quelconque des revendications précédentes, **caractérisé en ce que** le produit humidifié (1) est transporté à l'aide d'un dispositif de transport, de préférence à l'aide d'une pompe (6), à travers la conduite d'alimentation (2) jusqu'à l'unité d'alimentation (3), dans lequel la capacité de transport du dispositif de transport est régulée en tenant compte de ladite caractéristique.

4. Procédé selon l'une quelconque des revendications précédentes, **caractérisé en ce que** la valeur absolue de la caractéristique est moyennée sur une période de temps définie respective et la quantité du produit humidifié (1) déposé par unité de temps à l'aide de l'unité d'alimentation (3) sur la surface de séchage (4) est régulée en tenant compte des caractéristiques moyennées respectives.

5. Procédé selon l'une quelconque des revendications précédentes, **caractérisé en ce que** la caractéristique est déterminée sans contact, par exemple à l'aide d'un capteur à micro-ondes.

6. Procédé selon l'une quelconque des revendications précédentes, **caractérisé en ce que** la régulation de la quantité du produit humidifié (1) déposé par unité de temps sur la surface de séchage (4) a lieu en tenant compte de la capacité de séchage actuelle et/ou d'autres caractéristiques de l'installation de séchage.

7. Procédé selon l'une quelconque des revendications précédentes, **caractérisé en ce que** l'unité d'alimentation (3) comprend une extrudeuse avec un dispositif de pelletage pour le pelletage du produit humidifié (1), dans lequel le dispositif de pelletage fonctionne de préférence en tenant compte de la caractéristique.

8. Installation de séchage pour sécher un produit humidifié (1) sous forme de boue d'épuration à l'aide du procédé selon l'une quelconque ou plusieurs des revendications précédentes,
- dans laquelle l'installation de séchage présente au moins une surface de séchage (4) pour la réception du produit humidifié (1) pendant son séchage,
- dans laquelle l'installation de séchage possède au moins une unité d'alimentation (3) à l'aide de laquelle le produit humidifié (1) peut être déposé pendant le fonctionnement de l'installation de séchage sur la surface de séchage (4), et
- dans laquelle l'installation de séchage comprend au moins une conduite d'alimentation (2) par le biais de laquelle le produit humidifié (1) à sécher peut être acheminé à l'unité d'alimentation (3),
- dans laquelle l'installation de séchage comprend au moins un capteur (5) disposé dans la région de la conduite d'alimentation (2) ou de l'unité d'alimentation (3), à l'aide duquel une caractéristique peut être mesurée, qui dépend de la teneur en eau du produit humidifié (1) passant par le capteur (5),
- dans laquelle l'installation de séchage présente des moyens à l'aide desquels la quantité du produit humidifié (1) déposé pendant le fonctionnement de l'installation de séchage à l'aide de l'unité d'alimentation (3) sur la surface de séchage (4) peut être régulée en continu en tenant compte de la caractéristique,
- dans laquelle le moyen comprend un dispositif de transport à l'aide duquel le produit humidifié (1) est acheminé pendant le fonctionnement de l'installation de séchage par le biais de la conduite d'alimentation (2) à l'unité d'alimentation (3),
- dans laquelle le dispositif de transport est réalisé sous forme de pompe (6), et
- dans laquelle le moyen comprend une unité de contrôle qui est réalisée pour réguler la capacité de transport du dispositif de transport en tenant compte de ladite caractéristique,
**caractérisée en ce que** l'unité de contrôle est réalisée pour choisir la quantité du produit humidifié (1) déposé par unité de temps sur la surface de séchage (4) d'autant plus petite que la teneur en eau est grande, et pour modifier la quantité du produit humidifié (1) déposé par unité de temps sur la surface de séchage (4) uniquement lorsque la valeur absolue de la caractéristique dans une période de temps définie varie d'au moins une valeur absolue minimale définie ou s'écarte d'une valeur de référence définie d'une valeur absolue minimale définie ou lorsqu'une modification définie liée au temps de la teneur en eau du produit humidifié (1) passant par le capteur (5) est déterminée.

9. Installation de séchage selon la revendication 8, **caractérisée en ce que** le capteur (5) est réalisé pour déterminer la caractéristique sans contact.
